# FASCICULE DE BREVET EUROPEEN

(11) **EP 3 763 932 B1**
(45) Date de publication et mention de la délivrance du brevet: **27.07.2022**
(21) Numéro de dépôt: 20182880.3
(22) Date de dépôt: 29.06.2020
(51) Int. Cl.: F02C 7/36, F02K 3/072, F16H 1/28

(54) **REDUCTEUR MÉCANIQUE POUR UNE TURBOMACHINE D'AÉRONEF**
MECHANISCHES REDUKTIONSGETRIEBE FÜR TURBOTRIEBWERK EINES LUFTFAHRZEUGS
MECHANICAL GEAR DRIVE FOR AN AIRCRAFT TURBINE ENGINE

(30) Priorité: 08.07.2019 FR 1907610
(43) Date de publication de la demande: 13.01.2021
(73) Titulaire: Safran Transmission Systems, 92700 Colombes (FR)
(72) Inventeur: NIEPCERON, Clément, Paul, René, 77550 MOISSY-CRAMAYEL (FR); MORELLI, Boris, Pierre, Marcel, 77550 MOISSY-CRAMAYEL (FR); SEYFRID, Marc, Dominique, 77550 MOISSY-CRAMAYEL (FR); LEFEBVRE, Simon, Loïc, Clément, 77550 MOISSY-CRAMAYEL (FR)
(74) Mandataire: Gevers & Orès

(56) Documents cités:
- WO-A1-2015/019025
- US-A- 5 433 674
- US-A1- 2008 098 716
- US-B1- 6 223 616

## Description

### Domaine technique de l'invention

La présente invention concerne un réducteur mécanique pour une turbomachine, en particulier d'aéronef.

### Arrière-plan technique

L'état de l'art comprend notamment les documents US-A1-2008/098716, US-A1-6,223,616, US-A-4,433,674, WO-A1-2015/019025, WO-A1-2010/092263, FR-A1-2 987 416 et FR-A1-3 041 054.

Le rôle d'un réducteur mécanique est de modifier le rapport de vitesse et le couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
∘ sur un réducteur planétaire, le porte-satellites est fixe et la couronne constitue l'arbre de sortie du dispositif qui tourne dans le sens inverse du solaire.
∘ sur un réducteur épicycloïdal, la couronne est fixe et le porte-satellites constitue l'arbre de sortie du dispositif qui tourne dans le même sens que le solaire.
∘ sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champ magnétique.

Il existe plusieurs types d'engrènement par contact comme avec des dentures droites ou en chevron.

Dans le cas d'engrènement par dentures en chevron, la couronne est en général formée par deux demi-couronnes coaxiales qui comprennent chacune à leur périphérie interne des dents de la denture et à leur périphérie externe des brides de fixation, en particulier à un arbre lorsque la couronne est mobile en rotation. Les dents sont portées par des jantes annulaires qui sont reliées aux brides par des voiles tronconiques.

Un inconvénient de cette technologie est son encombrement. En particulier, l'encombrement radial de l'assemblage et du mode de fixation des demi-couronnes impacte de manière significative l'encombrement radial du réducteur dans son ensemble.

La présente invention propose un perfectionnement à cette technologie, qui est simple, efficace et économique.

### Résumé de l'invention

Selon la revendication 1, l'invention concerne un réducteur mécanique pour une turbomachine, en particulier d'aéronef, comportant :
- un solaire central d'axe X de rotation,
- une couronne s'étendant autour de l'axe X et du solaire et comportant une denture en chevron, la couronne étant formée par deux demi-couronnes coaxiales qui sont écartées l'une de l'autre par un espace annulaire et qui comprennent chacune des dents de la denture, la couronne étant mobile en rotation autour dudit axe X,
- des satellites disposés entre le solaire et la couronne et supportés par un porte-satellites immobile en rotation autour dudit axe X,
- au moins un arbre solidaire en rotation de la couronne,
- une pièce annulaire de recouvrement qui s'étend autour dudit espace et d'au moins une partie de la couronne, cette pièce étant solidarisée de manière indépendante par des brides et/ou des cannelures à chacune des demi-couronnes,
caractérisé en ce que la couronne est solidaire en rotation de deux arbres s'étendant respectivement sur chaque côté du réducteur.

L'invention propose ainsi une nouvelle technologie d'assemblage et de fixation des demi-couronnes. Elle permet ainsi de supprimer les voiles de la technique antérieure qui sont encombrants en direction radiale. Chaque demi-couronne est rendue solidaire en rotation de la pièce de recouvrement par des moyens de fixation qui sont indépendants des moyens de fixation de cette pièce à l'autre demi-couronne. Ces moyens de fixation sont à brides et/ou à cannelures.

La couronne est solidarisée en rotation à deux arbres distincts par l'intermédiaire de la pièce de recouvrement, ce qui permet d'assurer cette liaison de manière simple et avec un encombrement réduit.

La couronne du réducteur peut être solidaire en rotation d'un arbre de soufflante et d'un arbre de turbine de la turbomachine. Le réducteur selon l'invention peut être intégré dans une turbomachine à turbine contrarotative par exemple.

Le réducteur selon l'invention peut comprendre une ou plusieurs des caractéristiques suivantes:
- la pièce de recouvrement s'étend entre les deux arbres, ou recouvre une partie des deux arbres, ou est formée d'une seule pièce avec l'un des arbres ;
- la pièce de recouvrement comprend des premières cannelures d'accouplement à l'une des demi-couronnes, et des secondes cannelures d'accouplement à l'autre des demi-couronnes, les demi-couronnes étant serrées axialement l'une contre l'autre et contre un élément de la pièce de recouvrement par l'intermédiaire d'un écrou vissé dans ou sur la pièce de recouvrement ;
- l'une des demi-couronnes est formée d'une seule pièce avec l'un des arbres, et l'autre des demi-couronnes est formée d'une seule pièce avec l'autre arbre ;
- la pièce de recouvrement est formée d'une seule pièce avec l'un des arbres, et comprend en outre des troisièmes cannelures d'accouplement à l'autre arbre ;
- la couronne est dépourvue de brides de fixation ;
- la pièce de recouvrement comprend une paroi cylindrique reliée à chacune de ses extrémités axiales à une bride radiale, une première des brides radiales de la pièce de recouvrement étant fixée à une bride radiale d'une des demi-couronnes, et une seconde des brides radiales de la pièce de recouvrement étant fixée à une bride radiale de l'autre demi-couronne ;
- la bride de l'une des demi-couronnes est serrée entre la bride de la pièce de recouvrement et une bride radiale de l'un des arbres, et la bride de l'autre demi-couronne est serrée entre la bride de la pièce de recouvrement et une bride radiale de l'autre arbre ;
- chaque demi couronne comprend une jante annulaire ayant une forme générale parallélépipédique en section axiale, la jante comportant les dents à sa périphérie interne et une surface cylindrique externe à sa périphérie externe, cette surface étant entourée avec un jeu faible ou nul par la pièce de recouvrement ;
- ladite pièce a une épaisseur radiale qui varie, et en particulier qui augmente, d'une extrémité axiale à une extrémité axiale opposée ; ceci permet notamment d'optimiser la rigidité de la pièce en fonction notamment des efforts appliqués aux dents des demi-couronnes en fonctionnement, afin d'éviter leur désalignement par rapport aux dents complémentaires des satellites.

La présente invention concerne encore une turbomachine, en particulier d'aéronef, comportant un réducteur tel que décrit ci-dessus.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en coupe axiale d'une turbomachine utilisant l'invention,
[Fig.2] la figure 2 est une vue schématique partielle en coupe axiale d'un réducteur mécanique,
[Fig.3] la figure 3 est une vue schématique en coupe axiale et en perspective d'une partie d'un réducteur mécanique, selon un premier mode de réalisation de l'invention,
[Fig.4] la figure 4 est une vue schématique en coupe axiale et en perspective d'une partie d'un réducteur mécanique, selon un deuxième mode de réalisation de l'invention, et
[Fig.5] la figure 5 est une vue schématique en coupe axiale et en perspective d'une partie d'un réducteur mécanique, selon un troisième mode de réalisation de l'invention.

### Description détaillée de l'invention

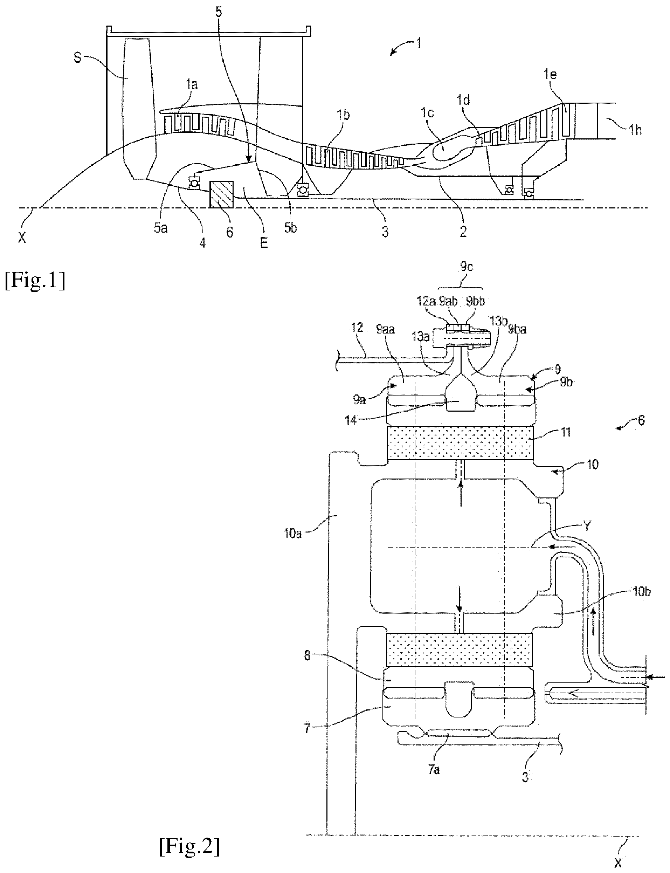

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est relié à l'arbre BP 3 au moyen d'un réducteur 6. Ce réducteur est généralement de type planétaire ou épicycloïdal.

La description qui suit et la présente invention concernent plus spécifiquement un réducteur du type planétaire.

Le réducteur 6 est positionné dans la partie amont ou aval de la turbomachine, par rapport à la direction générale des gaz au sein de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

La figure 2 montre une partie du réducteur 6. En entrée, le réducteur 6 est relié à l'arbre BP 3, par exemple par l'intermédiaire de cannelures 7a. Ainsi, l'arbre BP 3 entraîne un pignon planétaire appelé le solaire 7. Classiquement, le solaire 7, dont l'axe de rotation est confondu avec l'axe X de la turbomachine, entraîne une série de pignons appelés satellites 8, qui sont équirépartis sur le même diamètre autour de l'axe de rotation X. Ce diamètre est égal au double de l'entraxe de fonctionnement entre solaire 7 et satellites 8. Le nombre de satellites 8 est généralement défini entre trois et huit pour ce type d'application. L'ensemble des satellites 8 est maintenu par un châssis appelé porte-satellites 10. Chaque satellite 8 tourne autour de son propre axe Y, et engrène avec la couronne 9.

En sortie du réducteur, dans cette configuration planétaire, l'ensemble des satellites 8 est maintenu par un porte-satellites 10 qui est fixé au carter moteur ou stator 5. Chaque satellite entraine la couronne qui est reliée à l'arbre de soufflante 4 via un porte-couronne 12.

Chaque satellite 8 est monté libre en rotation à l'aide d'un palier 11, par exemple de type roulement ou palier hydrostatique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes et de paliers égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture d'un réducteur peut être en chevron et formée par deux rangées annulaires coaxiales de dents, les dents de la première rangée présentant un angle d'hélice opposé par rapport aux dents de la seconde rangée.

La couronne 9 comprend une denture en chevron et est formée de deux demi-couronnes:
∘ une demi-couronne amont 9a comportant une jante 9aa et une bride de fixation 9ab qui sont reliées entre elles par un voile tronconique 13a. La jante 9aa comprend à sa périphérie interne l'hélice ou les dents avant de la denture du réducteur. Cette hélice avant engrène avec celle du satellite 8 qui engrène avec celle du solaire 7. Le voile 13a s'étend radialement vers l'extérieur à la périphérie externe de la jante 9aa. La bride 9ab s'étend dans un plan perpendiculaire à l'axe X.
∘ une demi-couronne aval 9b constituée d'une jante 9ba et une bride de fixation 9bb qui sont reliées entre elles par un voile tronconique 13b. La jante 9ba comprend à sa périphérie interne l'hélice ou les dents arrière de la denture du réducteur. Cette hélice aval engrène avec celle du satellite 8 qui engrène avec celle du solaire 7. Le voile 13b s'étend radialement vers l'extérieur à la périphérie externe de la jante 9ba. La bride 9bb s'étend dans un plan perpendiculaire à l'axe X.

La bride de fixation 9ab de la couronne avant 9a et la bride de fixation 9bb de la couronne arrière 9b forment la bride de fixation 9c de la couronne. Cette bride 9c s'étend au droit d'un espace annulaire 14 situé entre les demi-couronnes 9a, 9b ou plutôt entre les jantes 9aa, 9ba. La couronne 9 est fixée au porte-couronne 12 en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6, en vue de la lubrification des différentes pièces et engrènements du réducteur.

La technologie de la figure 2 représente l'art antérieur à la présente invention et présente un inconvénient lié à l'encombrement, en particulier radial, de sa couronne 9.

La présente invention propose de modifier le mode d'assemblage de la couronne afin notamment de pouvoir supprimer les voiles précitées.

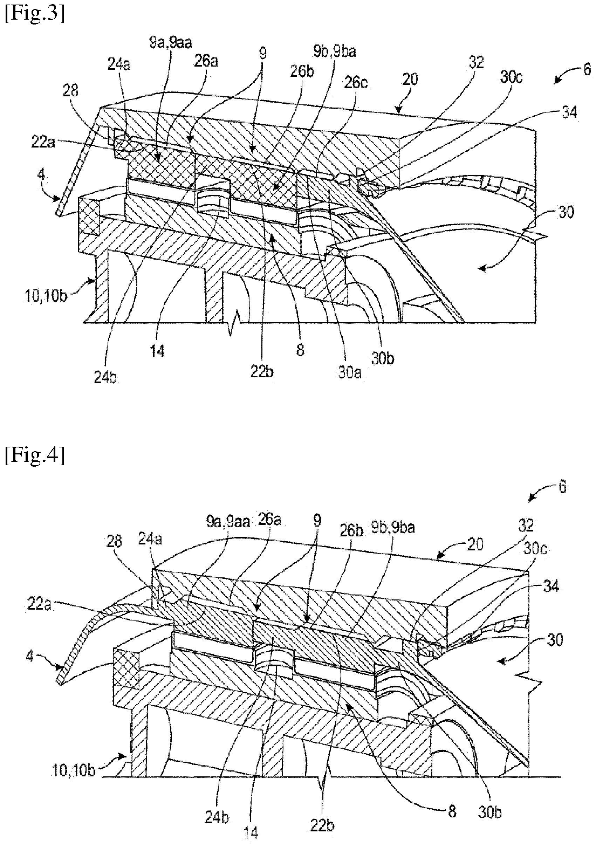

Les figures 3 à 5 illustrent des variantes de réalisation de l'invention dans lesquels les éléments déjà décrits dans ce qui précède sont désignés par les mêmes numéros de référence.

Ces variantes présentent au moins un point commun lié à l'utilisation d'une pièce annulaire 20 de recouvrement pour assurer l'assemblage de la couronne 9 et en particulier de ses demi-couronnes 9a, 9b. La pièce 20 s'étend autour de l'espace inter-couronnes ou inter-jantes 14 et d'au moins une partie de la couronne 9, et est solidarisée de manière indépendante par des brides et/ou des cannelures à chacune des demi-couronnes 9a, 9b.

Dans le mode de réalisation de la figure 3, les demi-couronnes 9a, 9b sont dépourvues de brides. Chaque jante 9aa, 9ba comprend des dents à sa périphérie interne et des cannelures 22a, 22b à sa périphérie externe. En particulier, ces cannelures peuvent être en développante de cercle à centrage en tête. Chaque jante 9aa, 9ba peut en outre comprendre un rebord cylindrique avant 24a, 24b.

La pièce de recouvrement 20 a une forme générale cylindrique et s'étend autour des demi-couronnes 9a, 9b. La pièce 20 a son extrémité amont qui est reliée à l'arbre de soufflante 4. Comme dans l'exemple représenté, la pièce 20 et l'arbre 4 pourraient être formés d'une seule pièce. L'arbre 4 s'étend vers l'amont depuis le réducteur 6 et est donc situé du côté amont du réducteur. La pièce 20 comprend à sa périphérie interne des cannelures 26a d'accouplement aux cannelures 22a, et des cannelures 26b d'accouplement aux cannelures 22b. Les cannelures 26a, 26b peuvent être confondues ou s'étendre dans le prolongement les unes des autres.

En amont des cannelures 26a, 26b, la pièce 20 comprend un rebord annulaire radialement interne 28 qui forme un appui axial pour le rebord amont 24a de la demi-couronne amont 9a. Le rebord amont 24b de la demi-couronne aval 9b prend appui sur une face annulaire aval de la demi-couronne amont 9a. En aval des cannelures 26a, 26b, la pièce 20 comprend des cannelures 26c d'accouplement avec des cannelures 30a complémentaires d'un autre arbre 30 de la turbomachine. L'arbre 30 s'étend vers l'aval depuis le réducteur 6 et est donc situé du côté aval du réducteur. A titre d'exemple non limitatif, dans le cas où la turbomachine serait du type précité et illustré à la figure 1, l'arbre 30 serait relié au corps basse pression.

En variante, dans le cas d'une turbomachine à réducteur placé du côté aval de la turbomachine, l'arbre 4 pourrait être relié à un rotor de turbine, et l'arbre 30 pourrait être relié au disque de soufflante.

Les cannelures 30a sont ici situées sur une portion cylindrique amont 30b de l'arbre 30 dont l'extrémité amont est en appui sur une face annulaire aval de la demi-couronne arrière 9b. Cette portion 30b comprend une face radiale aval 30c en aval des cannelures 30a qui peut être définie par un rebord annulaire externe 32 de cette portion 30b.

En aval des cannelures 26a, 26b, 26c, la pièce 20 comprend en outre un filetage interne de vissage d'un écrou 34 qui prend appui axialement sur la face 30d. On comprend donc que les demi-couronnes 9a, 9b ainsi que la portion 30b de l'arbre 30 dans l'exemple représenté, sont serrées axialement les unes contre les autres et sur le rebord 28 par vissage et serrage de l'écrou 34.

En l'absence de l'arbre 30, l'écrou 34 peut être vissé et prendre appui directement sur la face aval de la demi-couronne arrière 9b.

La figure 3 permet de constater qu'un jeu radial relativement faible est présent entre la pièce 20 et les jantes 9ab, 9bb des demi-couronnes 9a, 9b. Elle permet en outre de voir que la rigidité de la pièce peut être adaptée pour éviter un désalignement des dentures en fonctionnement. Dans l'exemple représenté, l'épaisseur radiale de la pièce 20 varie et en particulier augmente depuis son extrémité amont jusqu'à son extrémité aval afin de rigidifier cette extrémité aval.

Dans le mode de réalisation de la figure 4, les demi-couronnes 9a, 9b sont dépourvues de brides. Chaque jante 9aa, 9ba comprend des dents de denture à sa périphérie interne et des cannelures rectilignes 22a, 22b à sa périphérie externe. Chaque jante 9aa, 9ba peut en outre comprendre un rebord cylindrique amont 24a, 24b.

La pièce de recouvrement 20 a une forme générale cylindrique et s'étend autour des demi-couronnes 9a, 9b.

Dans l'exemple représenté, la demi-couronne amont 9a est reliée à l'arbre 4, en particulier par son rebord 24a, et peut être formée d'une seule pièce avec l'arbre 4. L'arbre 4 s'étend vers l'amont depuis le réducteur 6 et est donc situé du côté amont du réducteur.

La demi-couronne aval 9b est reliée à l'arbre 30 et peut être formée d'une seule pièce avec l'arbre 30. L'arbre 30 s'étend vers l'aval depuis le réducteur 6 et est donc situé du côté aval du réducteur.

Dans le cas où la turbomachine comprendrait une turbine intermédiaire (entre les turbines haute pression et basse pression), l'arbre 30 pourrait être relié au rotor de cette turbine intermédiaire. La pièce 20 comprend à sa périphérie interne des cannelures 26a d'accouplement aux cannelures 22a, et des cannelures 26b d'accouplement aux cannelures 22b. Les cannelures 26a, 26b peuvent être confondues ou s'étendre dans le prolongement les unes des autres.

En amont des cannelures 26a, 26b, la pièce 20 comprend un rebord annulaire radialement interne 28 qui forme une butée d'appui axial pour le rebord amont 24a de la demi-couronne amont 9a. Le rebord amont 24b de la demi-couronne arrière 9b prend appui sur une face annulaire aval de la demi-couronne amont 9a.

La portion 30b de l'arbre 30 comprend une face radiale aval 30c qui peut être définie par un rebord annulaire externe 32 de cette portion 30b.

En aval des cannelures 26a, 26b, 26c, la pièce 20 comprend un filetage interne de vissage d'un écrou 34 qui prend appui axialement sur la face 30d. On comprend donc que les demi-couronnes 9a, 9b sont serrées axialement les unes contre les autres et sur le rebord 28 par vissage et serrage de l'écrou 34. La figure 4 permet également de constater qu'un jeu radial relativement faible est présent entre la pièce 20 et les jantes 9ab, 9bb des demi-couronnes 9a, 9b. Elle permet en outre de voir que la rigidité de la pièce peut être adaptée pour éviter un désalignement des dentures en fonctionnement. Dans l'exemple représenté, l'épaisseur radiale de la pièce 20 varie et en particulier augmente depuis son extrémité avant jusqu'à son extrémité arrière afin de rigidifier cette dernière.

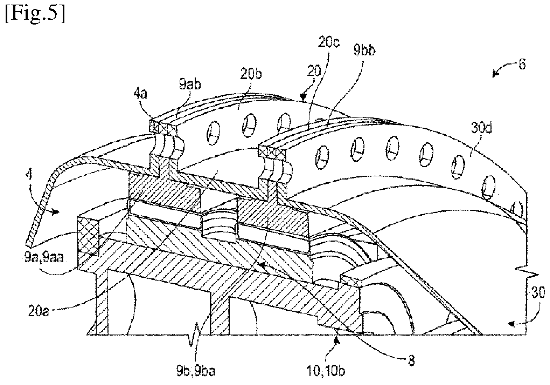

Dans le mode de réalisation de la figure 5, les demi-couronnes 9a, 9b sont équipées de brides radiales 9ab, 9bb sans voile de liaison à leurs jantes 9aa, 9ba. Chaque jante 9aa, 9ba comprend des dents de denture à sa périphérie interne et la bride radiale 9ab, 9bb à sa périphérie externe.

La pièce de recouvrement 20 comprend une paroi cylindrique 20a qui est reliée à chacune de ses extrémités axiales à une bride radiale 20b, 20c. La pièce 20 est ici dépourvue de cannelures d'accouplement.

La paroi 20a s'étend entre les brides 9ab, 9bb de la couronne et directement autour des jantes 9aa, 9ba, de préférence sans jeu ou avec un jeu faible en direction radiale. La bride amont 20b de la pièce 20 est appliquée axialement contre la bride 9ab de la demi-couronne amont 9a. La bride aval 20c de la pièce 20 est appliquée axialement contre la bride 9bb de la demi-couronne aval 9b.

L'arbre 4 s'étend vers l'amont depuis le réducteur 6 et est donc situé du côté amont du réducteur. L'arbre 4 comprend une bride radiale 4a de fixation aux brides 9ab, 20b. Les brides 4a, 9ab, 20b comprennent des orifices traversants de passage de moyens de fixation du type vis-écrou ou analogues (non représentés).

L'arbre 30 s'étend vers l'aval depuis le réducteur 6 et est donc situé du côté aval du réducteur. L'arbre 30 comprend une bride radiale 30d de fixation aux brides 9bb, 20c. Les brides 30d, 9bb, 20c comprennent des orifices traversants de passage de moyens de fixation du type vis-écrou ou analogues (non représentés).

Comme évoqué dans ce qui précède, le réducteur 6 selon l'invention peut être intégré dans une turbomachine à turbine contrarotative.

L'invention permet notamment d'obtenir un encombrement radial le plus réduit possible, en respectant les contraintes suivantes :
- l'assemblage des demi-couronnes doit permettre la transmission du couple depuis les satellites vers l'arbre,
- l'assemblage doit maintenir en position les demi-couronnes entre-elles (positionnement radial et angulaire), et
- l'assemblage doit maintenir l'engagement de la denture de la couronne.

## Revendications

1. Réducteur mécanique (6) pour une turbomachine, en particulier d'aéronef, comportant :
- un solaire central (7) d'axe X de rotation,
- une couronne (9) s'étendant autour de l'axe X et du solaire (7) et comportant une denture en chevron, la couronne étant formée par deux demi-couronnes (9a, 9b) coaxiales qui sont écartées l'une de l'autre par un espace annulaire (14) et qui comprennent chacune des dents de la denture, la couronne étant mobile en rotation autour dudit axe X,
- des satellites (8) disposés entre le solaire (7) et la couronne (9) et supportés par un porte-satellites (10) immobile en rotation autour dudit axe X,
- au moins un arbre (4, 30) solidaire en rotation de la couronne (9), et
- une pièce de recouvrement (20) annulaire qui s'étend autour dudit espace annulaire (14) et d'au moins une partie de la couronne (9), cette pièce de recouvrement (20) étant solidarisée par des brides (20b, 20c) et/ou des cannelures (26a, 26b, 26c) à chacune des demi-couronnes (9a, 9b), **caractérisée en ce que** la couronne (9) est solidaire en rotation de deux arbres (4, 30) s'étendant respectivement sur chaque côté du réducteur.

2. Réducteur (6) selon la revendication 1, dans lequel la pièce de recouvrement (20) :
- s'étend entre les deux arbres (4, 30), ou
- recouvre une partie des deux arbres, ou
- est formée d'une seule pièce avec l'un des arbres.

3. Réducteur (6) selon l'une des revendications précédentes, dans lequel la pièce de recouvrement (20) comprend des premières cannelures (26a) d'accouplement à l'une des demi-couronnes (9a), et des secondes cannelures (26b) d'accouplement à l'autre des demi-couronnes (9b), les demi-couronnes étant serrées axialement l'une contre l'autre et en appui axial contre une butée (28) de la pièce de recouvrement par l'intermédiaire d'un écrou (34) vissé dans ou sur la pièce de recouvrement.

4. Réducteur (6) selon la revendication 3, dans lequel l'une des demi-couronnes (9a) est formée d'une seule pièce avec l'un des arbres (4), et l'autre des demi-couronnes (9b) est formée d'une seule pièce avec l'autre arbre (30).

5. Réducteur (6) selon la revendication 3, dans lequel la pièce de recouvrement (20) est formée d'une seule pièce avec l'un des arbres (4), et comprend en outre des troisièmes cannelures (26c) d'accouplement à l'autre arbre (30).

6. Réducteur (6) selon l'une des revendications 3 à 5, dans lequel la couronne (9) est dépourvue de brides de fixation.

7. Réducteur (6) selon l'une des revendications 1 à 3, dans lequel la pièce de recouvrement (20) comprend une paroi cylindrique (20a) reliée à chacune de ses extrémités axiales à une bride radiale (20b, 20c), une première des brides radiales (20b) de la pièce de recouvrement étant fixée à une bride radiale (9ab) d'une des demi-couronnes (9a), et une seconde des brides radiales (20c) de la pièce de recouvrement étant fixée à une bride radiale (9bb) de l'autre demi-couronne (9b).

8. Réducteur (6) selon la revendication 7, en dépendance de la revendication 2 ou 3, dans lequel la bride (9ab) de l'une des demi-couronnes est serrée entre la bride (20b) de la pièce de recouvrement (20) et une bride radiale (4a) de l'un des arbres (4), et la bride (9bb) de l'autre demi-couronne (9b) est serrée entre la bride (20c) de la pièce de recouvrement et une bride radiale (30d) de l'autre arbre (30).

9. Réducteur (6) selon l'une des revendications précédentes, dans lequel chaque demi couronne (9a, 9b) comprend une jante annulaire (9aa, 9ba) ayant une forme générale parallélépipédique en section axiale, la jante comportant les dents à sa périphérie interne et une surface cylindrique externe à sa périphérie externe, cette surface étant entourée avec un jeu faible ou nul par la pièce de recouvrement (20).

10. Turbomachine, en particulier d'aéronef, comportant un réducteur (6) selon l'une des revendications précédentes.

## Patentansprüche

1. Mechanisches Reduktionsgetriebe (6) für ein Turbomaschine, insbesondere eines Luftfahrzeugs, Folgendes beinhaltend:
- ein zentrales Sonnenrad (7) mit einer Drehachse X,
- einen Kranz (9), der sich um die Achse X des Sonnenrades (7) erstreckt und eine Doppelschrägverzahnung beinhaltet, wobei der Kranz durch zwei koaxiale Halbkränze (9a, 9b) gebildet wird, die voneinander durch einen ringförmigen Freiraum (14) beabstandet sind, und die jeweils Zähne der Verzahnung umfassen, wobei der Kranz um die Achse X herum drehbeweglich ist,
- Satelliten (8), die zwischen dem Sonnenrad (7) und dem Kranz (9) angeordnet sind, und durch einen um die Achse X herum nicht drehbeweglichen Satellitenträger (10) gestützt werden,
- mindestens eine Welle (4, 30), die drehfest mit dem Kranz (9) verbunden ist, und
- ein ringförmiges Überdeckungsstück (20), das sich um den ringförmigen Freiraum (14) und um mindestens einen Teil des Kranzes (9) herum erstreckt, wobei dieses Überdeckungsstück (20) durch Flansche (20b, 20c) und/oder Kerbverzahnungen (26a, 26b, 26c) fest mit jedem der Halbkränze (9a, 9b) verbunden ist, **dadurch gekennzeichnet, dass** der Kranz (9) drehfest mit den beiden Wellen (4, 30) verbunden ist, die sich jeweils auf jeder Seite des Reduktionsgetriebes erstrecken.

2. Reduktionsgetriebe (6) nach Anspruch 1, wobei das Überdeckungsstück (20):
- sich zwischen den beiden Wellen (4, 30) erstreckt, oder
- einen Teil der beiden Wellen abdeckt, oder
- aus einem Stück mit einer der Wellen gebildet ist.

3. Reduktionsgetriebe (6) nach einem der vorstehenden Ansprüche, wobei das Überdeckungsstück (20) erste Kerbverzahnungen (26a) zum Ankoppeln an einen der Halbkränze (9a), und zweite Kerbverzahnungen (26b) zum Ankoppeln an den anderen der Halbkränze (9b) umfasst, wobei die Halbkränze axial aneinandergeklemmt sind und axial durch eine Mutter (34) an einem Anschlag (28) des Überdeckungsstücks anliegen, die in oder auf das Überdeckungsstück geschraubt wird.

4. Reduktionsgetriebe (6) nach Anspruch 3, wobei der eine der Halbkränze (9a) aus einem Stück mit einer der Wellen (4) gebildet ist, und der andere der Halbkränze (9b) aus einem einzigen Stück mit der anderen Welle (30) gebildet ist.

5. Reduktionsgetriebe (6) nach Anspruch 3, wobei das Überdeckungsstück (20) aus einem Stück mit einer der Wellen (4) gebildet ist, und weiter dritte Kerbverzahnungen (26c) zum Ankoppeln an die andere Welle (30) umfasst.

6. Reduktionsgetriebe (6) nach einem der Ansprüche 3 bis 5, wobei der Kranz (9) nicht mit Befestigungsflanschen versehen ist.

7. Reduktionsgetriebe (6) nach einem der Ansprüche 1 bis 3, wobei das Überdeckungsstück (20) eine zylindrische Wand (20a) umfasst, die an jedem ihrer axialen Enden an einen radialen Flansch (20b, 20c) angeschlossen ist, wobei ein erster der radialen Flansche (20b) des Überdeckungsstücks an einem radialen Flansch (9ab) eines der Halbkränze (9a) befestigt ist, und ein zweiter der radialen Flansche (20c) des Überdeckungsstücks an einem radialen Flansch (9bb) des anderen Halbkranzes (9b) befestigt ist.

8. Reduktionsgetriebe (6) nach Anspruch 7, in Abhängigkeit von Anspruch 2 oder 3, wobei der Flansch (9ab) des einen der Halbkränze zwischen dem Flansch (20b) des Überdeckungsstücks (20) und einem radialen Flansch (4a) der einen der Wellen (4) geklemmt ist, und der Flansch (9bb) des anderen Halbkranzes (9b) zwischen dem Flansch (20c) des Überdeckungsstücks und einem radialen Flansch (30d) der anderen Welle (30) geklemmt ist.

9. Reduktionsgetriebe (6) nach einem der vorstehenden Ansprüche, wobei jeder Halbkranz (9a, 9b) einen ringförmigen Radkranz (9aa, 9ba) umfasst, der eine im Allgemeinen quaderförmige Form im axialen Querschnitt aufweist, wobei der Radkranz Zähne an seiner inneren Peripherie und eine zylindrische Außenoberfläche an seiner äußeren Peripherie beinhaltet, wobei diese Oberfläche mit einem geringen oder Null-Spiel von dem Überdeckungsstück (20) umgeben ist.

10. Turbomaschine, insbesondere eines Luftfahrzeugs, ein Reduktionsgetriebe (6) nach einem der vorstehenden Ansprüche beinhaltend.

## Claims

1. A mechanical reduction gear (6) for a turbomachine, in particular for an aircraft, comprising:
- a central sun gear (7) of axis X of rotation,
- a ring gear (9) extending around the axis X and the sun gear (7) and comprising a herringbone toothing, the ring gear being formed by two coaxial half-ring gears (9a, 9b) which are spaced apart from each other by an annular space (14) and which each comprise teeth of the toothing, the ring gear being rotatable around said axis X,
- planet gears (8) disposed between the sun gear (7) and the ring gear (9) and supported by a planet carrier (10) which is immobile in rotation about said axis X,
- at least one shaft (4, 30) rotationally fixed to the ring gear (9), and
- an annular covering part (20) which extends around said annular space (14) and at least one portion of the ring gear (9), this covering part (20) being fixed by flanges (20b, 20c) and/or splines (26a, 26b, 26c) to each of the half-ring gears (9a, 9b),
**characterised in that** the ring gear (9) is rotationally fixed to two shafts (4, 30) extending respectively on each side of the reduction gear.

2. The reduction gear (6) according to claim 1, wherein the covering part (20):
- extends between the two shafts (4, 30), or
- covers a portion of the two shafts, or
- is formed integrally with one of the shafts.

3. The reduction gear (6) according to one of the preceding claims, wherein the covering part (20) comprises first splines (26a) for coupling to one of the half-ring gears (9a), and second splines (26b) for coupling to the other of the half-ring gears (9b), the half-ring gears being clamped axially against each other and in axial abutment against a abutment (28) of the covering part by means of a nut (34) screwed into or onto the covering part.

4. The reduction gear (6) according to claim 3, wherein one of the half-ring gears (9a) is formed integrally with one of the shafts (4) and the other of the half-ring gears (9b) is formed integrally with the other shaft (30).

5. The reduction gear (6) according to claim 3, wherein the covering part (20) is formed integrally with one of the shafts (4), and further comprises third splines (26c) for coupling to the other shaft (30).

6. The reduction gear (6) according to one of claims 3 to 5, wherein the ring gear (9) is free of fastening flanges.

7. The reduction gear (6) according to one of claims 1 to 3, wherein the covering part (20) comprises a cylindrical wall (20a) connected at each of its axial ends to a radial flange (20b, 20c), a first one of the radial flanges (20b) of the covering part being fixed to a radial flange (9ab) of one of the half-ring gears (9a), and a second one of the radial flanges (20c) of the covering part being fixed to a radial flange (9bb) of the other half-ring gear (9b).

8. The reduction gear (6) according to claim 7, depending on claim 2 or 3, wherein the flange (9ab) of one of the half-ring gears is clamped between the flange (20b) of the covering part (20) and a radial flange (4a) of one of the shafts (4), and the flange (9bb) of the other half-ring gear (9b) is clamped between the flange (20c) of the covering part and a radial flange (30d) of the other shaft (30).

9. The reduction gear (6) according to one of the preceding claims, in which each half-ring gear (9a, 9b) comprises an annular rim (9aa, 9ba) having a generally parallelepipedal shape in axial section, the rim comprising the teeth at its inner periphery and an outer cylindrical surface at its outer periphery, this surface being surrounded with little or no clearance by the covering part (20).

10. A turbomachine, in particular an aircraft turbomachine, comprising a reduction gear (6) according to one of the preceding claims.
